# EUROPEAN PATENT APPLICATION

(11) **EP 3 816 931 A1**
(43) Date of publication of application: **05.05.2021**
(21) Application number: 18923787.8
(22) Date of filing: 29.06.2018
(51) Int. Cl.: G06T 7/00

(54) **IDENTIFICATION METHOD, DETERMINATION METHOD, IDENTIFICATION PROGRAM, DETERMINATION PROGRAM, AND INFORMATION PROCESSING DEVICE**

(71) Applicant: FUJITSU LIMITED, Kanagawa 211-8588 (JP)
(72) Inventor: KATAOKA, Masahiro, Kawasaki-shi, Kanagawa 211-8588 (JP); MORI, Yumeto, Kawasaki-shi, Kanagawa 211-8588 (JP); HARAI, Natsuki, Kawasaki-shi, Kanagawa 211-8588 (JP)
(74) Representative: Hoffmann Eitle
(86) International application number: PCT/JP2018/024894
(87) International publication number: WO 2020/003510

(57) **Abstract**

An information processing apparatus (100) determines, by referring to a storage unit that stores therein contour data of a plurality of objects, whether a plurality of pieces of contour data associated with a contour of a subject included in a captured image. The information processing apparatus (100) acquires, when a determination result is affirmative, by referring to the storage unit, a plurality of pieces of region data associated with the plurality of pieces of corresponding contour data associated with the contour of the subject and specifies, based on the plurality of pieces of acquired region data, an object associated with the subject from among the plurality of objects.

## Description

### Technical Field

The present invention relates to a specifying method and the like.

### Background Art

In recent years, there is a technology for extracting edges from an image, specifying a contour (outline), and recognizing an object. For example, a plurality of edges included across blocks are extracted from each of image blocks of captured image data. Furthermore, there is a conventional technology for extracting a contour from a plurality of edges, narrowing down an object model associated with the captured angle.

### Citation List

### Patent Literature

Patent Literature 1 Japanese Laid-open Patent Publication No. 2017-091202
Patent Literature 2: Japanese Laid-open Patent Publication No. 2012-212322

### Summary

### Technical Problem

However, in the conventional technologies described above, there is a problem in that calculation load needed to specify a subject included in the captured image is increased.

For example, in order to extract a plurality of edges from the image blocks and specify the contour, a large amount of calculation is needed. Furthermore, in order to narrow down the object model associated with the captured angle and recognize the object, the calculation load is further increased.

Accordingly, it is an object in one aspect of an embodiment of the present invention to provide a specifying method, a determination method, a specifying program, a determination program, and an information processing apparatus that can reduce calculation load needed to specify a subject included in a captured image.

### Solution to Problem

According to an aspect of the embodiment of the invention, a specifying method includes: acquiring a captured image captured by an image capturing device; determining, based on a storage unit that stores therein a plurality of pieces of contour data indicating shapes of contours of a plurality of objects, whether a plurality of pieces of contour data associated with a contour of a subject included in the acquired captured image is included in the plurality of pieces of contour data indicating the shapes of the contours of the plurality of objects; acquiring, when a determination result is affirmative, based on a storage unit in which region data indicating shapes or patterns of regions positioned at an inner side of the contours of the objects is stored in association with the contour data indicating the shapes of the contours of the objects, a plurality of pieces of region data associated with the plurality of pieces of corresponding contour data associated with the contour of the subject; and specifying, based on the plurality of pieces of acquired region data, an object associated with the subject from among the plurality of objects.

### Advantageous Effects of Invention

It is possible to reduce calculation load needed to specify a subject included in a captured image.

### [Brief Description of Drawings] (BRIEF DESCRIPTION OF DRAWINGS)

FIG. 1 is a diagram illustrating a process performed by an information processing apparatus according to a first embodiment.
FIG. 2 is a functional block diagram illustrating a configuration of the information processing apparatus according to the first embodiment.
FIG. 3 is a diagram illustrating an example of a data structure of an image buffer according to the first embodiment.
FIG. 4 is a diagram illustrating an example of PostScript data.
FIG. 5 is a diagram illustrating a relationship between an outline and script data.
FIG. 6 is a flowchart illustrating the flow of a process performed by the information processing apparatus according to the first embodiment.
FIG. 7 is a diagram illustrating a process performed by an information processing apparatus according to a second embodiment.
FIG. 8 is a diagram illustrating a relationship between an outline and script data.
FIG. 9 is a functional block diagram illustrating a configuration of the information processing apparatus according to the second embodiment.
FIG. 10 is a diagram illustrating a process performed by a specifying unit according to the second embodiment.
FIG. 11 is a flowchart illustrating the flow of a process performed by the information processing apparatus according to the second embodiment.
FIG. 12 is a diagram illustrating another process performed by the information processing apparatus.
FIG. 13 is a diagram illustrating an example of a hardware configuration of a computer that implements the same function as that performed by the information processing apparatus according to the first embodiment.
FIG. 14 is a diagram illustrating an example of a hardware configuration of a computer that implements the same function as that performed by the information processing apparatus according to the second embodiment.

### Description of Embodiments

Preferred embodiments of a specifying method, a determination method, a specifying program, a determination program, and an information processing apparatus disclosed in the present invention will be explained in detail below with reference to the accompanying drawings. Furthermore, the present invention is not limited to the embodiments.

### First Embodiment

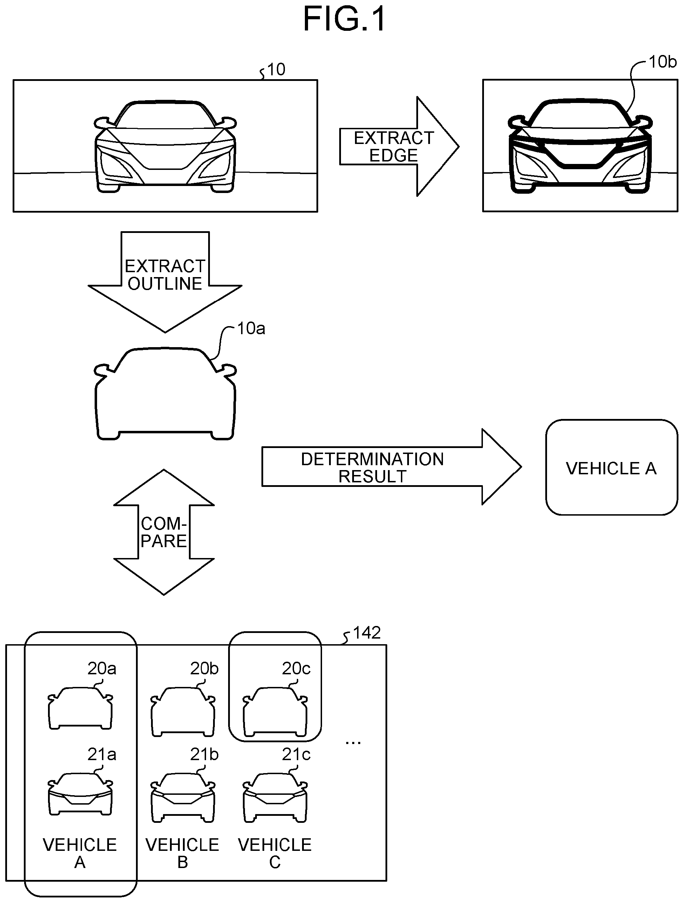

FIG. 1 is a diagram illustrating a process performed by an information processing apparatus according to a first embodiment. The information processing apparatus acquires captured image data 10 captured by a stereo camera. The information processing apparatus specifies the shape of a contour of a subject from the captured image data by using parallax of the stereo camera. It is assumed that the shape of the contour of the subject specified by the information processing apparatus is an outline 10a.

The information processing apparatus compares the outline 10a with outline information 142 and specifies the subject included in the captured image data 10 is associated with which object from among objects registered in the outline information.

The outline information 142 holes information on the outlines of the objects and information on the outlines of parts included in each of the objects. For example, the outline information 142 associates an outline 20a of a vehicle A with an outline 21a of parts of the vehicle A. The outline information 142 associates an outline 20b of a vehicle B with an outline 21b of parts of the vehicle B. The outline information 142 associates an outline 20c of a vehicle C with an outline 21c of parts of the vehicle C.

The information processing apparatus compares the outline 10a of the subject with each of the outlines 20a, 20b, and 20c held by the outline information 142 and specifies outlines similar to the outline 10a from each of the outlines 20a, 20b, and 20c. In the example illustrated in FIG. 1, it is assumed that the outlines similar to the outline 10a are the outlines 20a and 20c.

When the information processing apparatus specifies the outlines 20a and 20c, the information processing apparatus compares edges 21a and 21c of the parts associated with the outlines with an image edge 10b. The image edge 10b is an image obtained by extracting an edge from an area on an inner side of the contour of the subject from among all of the areas in the captured image data 10. The information processing apparatus compares the image edge 10b with the outlines 21a and 21c and determines, when the outline 21a is more similar to the image edge 10b than the outline 21b, that the object associated with the subject is the "vehicle A".

As described above, the information processing apparatus according to the first embodiment specifies the outline 10a from the captured image data 10 and narrows down the objects by comparing the outline 10a with the outlines 20a to 20c of the objects held by the outline information 142. After having narrowed down the objects, the information processing apparatus performs a process of comparing the image edge 10b of the captured image data 10 with the edge of the part and specifying the object associated with the subject. Consequently, it is possible to reduce calculation load needed to specify the subject included in the captured image data.

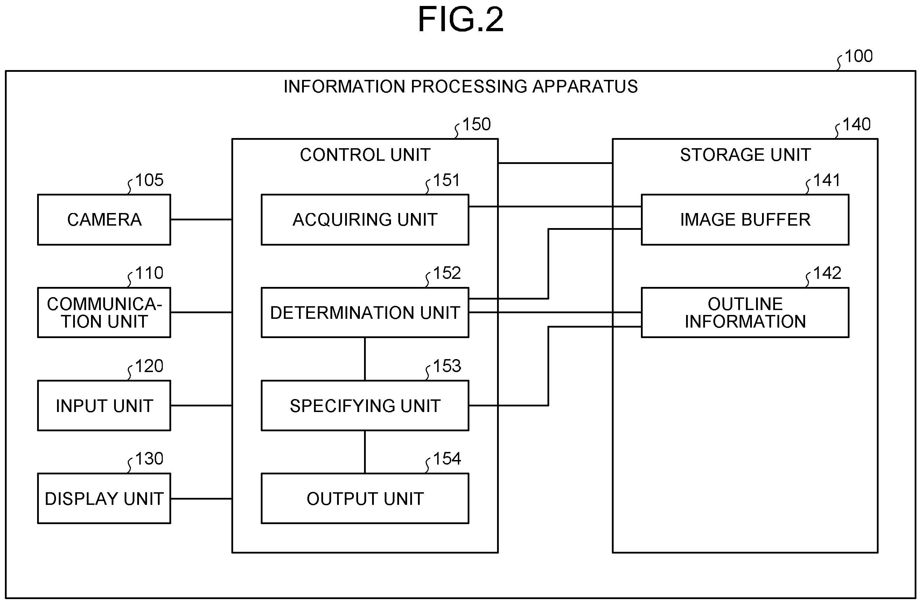

In the following, an example of a configuration of the information processing apparatus according to the first embodiment will be described. FIG. 2 is a functional block diagram illustrating a configuration of the information processing apparatus according to the first embodiment. As illustrated in FIG. 2, an information processing apparatus 100 includes a camera 105, a communication unit 110, an input unit 120, a display unit 130, a storage unit 140, and a control unit 150.

The camera 105 is a stereo camera (binocular camera) that simultaneously captures a subject from two different directions or is a monocular camera that can move from side to side, and can identify the outline of the subject based on parallax. The camera 105 outputs, to the information processing apparatus 100, first captured image data captured from a first direction and second captured image data captured from a second direction that is different from the first direction. In a description below, the first captured image data and the second captured image data are appropriately and collectively referred to as "captured image data".

The communication unit 110 is a processing unit that performs data communication with an external device via a network. The communication unit 110 is an example of a communication device. The information processing apparatus 100 may also be connected to the camera 105 via the network and receive the captured image data via the network.

The input unit 120 is an input device for inputting various kinds of information to the information processing apparatus 100. For example, the input unit 120 corresponds to a keyboard, a mouse, a touch panel, or the like.

The display unit 130 is a display device for displaying various kinds of information output from the control unit 150. For example, the display unit 130 corresponds to a liquid crystal display, a touch panel, and the like.

The storage unit 140 includes an image buffer 141 and the outline information 142. The storage unit 140 corresponds to a semiconductor memory device, such as a random access memory (RAM), a read only memory (ROM), and a flash memory, or a storage device, such as a hard disk drive (HDD).

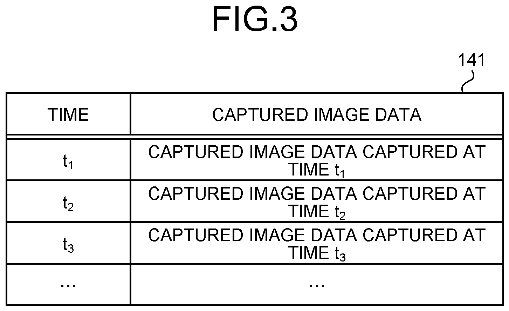

The image buffer 141 is a buffer that stores therein the captured image data captured by the camera 105. FIG. 3 is a diagram illustrating an example of a data structure of an image buffer according to the first embodiment. As illustrated in FIG. 3, the image buffer 141 associates the time with the captured image data. The time is the time at which the captured image data is captured. The captured image data is image data captured by the camera 105.

The outline information 142 is information that holds orientation information on objects, the outlines of the objects, and information on each of the parts included in the objects. The outline information 142 holds PostScript data as the information on each of the parts included in the corresponding objects.

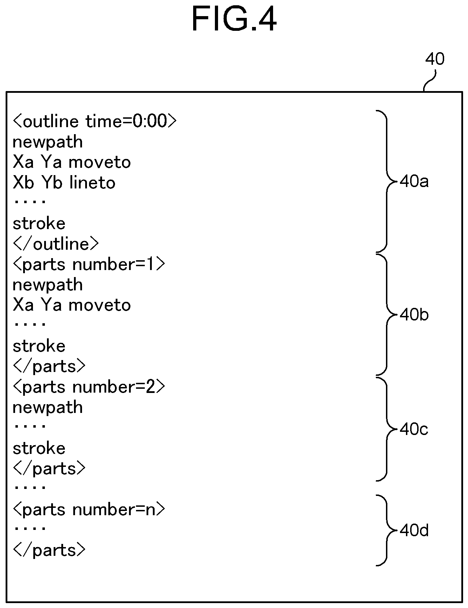

The PostScript data is PostScript data for drawing the outlines or edges of the plurality of parts. FIG. 4 is a diagram illustrating an example of PostScript data. As illustrated in FIG. 4, PostScript data 40 includes a plurality of pieces of PostScript data 40a, 40b, 40c, and 40d. The pieces of the PostScript data 40a to 40d are illustrated as an example; however, the PostScript data 40 may also include another piece of PostScript data.

The PostScript data 40a in the top layer is PostScript data for drawing the outline of the contour of the object (entire). For example, when the PostScript data 40 is PostScript data of the vehicle A at an angle of "0°/0:00", the outline of the contour of the object (entire) corresponds to the outline 20a illustrated in FIG. 1. In a description below, the outline drawn by the PostScript data in the top layer is referred to as a "top layer outline".

Each of the pieces of the PostScript data 40b to 40d that are the subdirectory of the PostScript data 40a is PostScript data for drawing the edge of each of the parts included in the contour of the object. For example, the PostScript data 40b is PostScript data for drawing an edge of a right winker of the object. The PostScript data 40c is PostScript data for drawing an edge if a left winker of the object. The PostScript data 40d is PostScript data for drawing an edge of the other parts of the contour of the object. In a description below, the edge drawn by the subdirectory PostScript data is appropriately referred to as a "parts edge". For example, the coordinates prescribed by each of the pieces of the PostScript data 40b to 40d that are the subdirectory of the PostScript data 40a may also be the relative coordinates based on the coordinates prescribed by the PostScript data in the top layer.

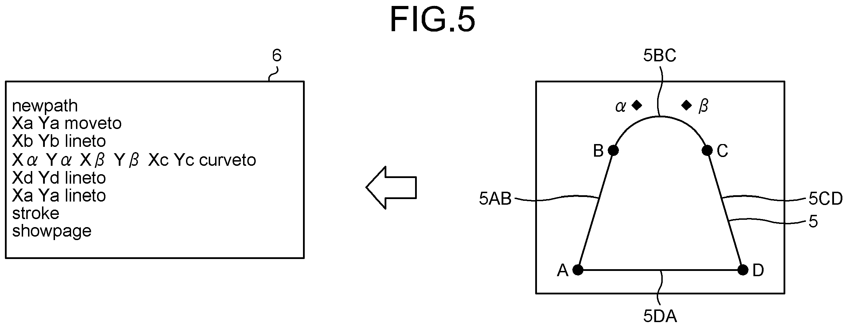

FIG. 5 is a diagram illustrating a relationship between an outline and script data. FIG. 5 illustrates, as an example, PostScript data 6 associated with an outline 5. It is possible to draw the outline 5 by the PostScript data 6.

The outline 5 is formed of a straight line 5AB, a curve 5BC, a straight line 5CD, and a straight line 5DA. The straight line 5AB is a straight line that connects a control point A and a control point B. The straight line 5CD is a straight line that connects a control point C and a control point D. The straight line 5DA is a straight line that connects the control point D and the control point A. The curve 5BC is a curve that connects the control point B and the control point C and the shape of the curve is determined by control points α and β and control points (end points) B and C.

Based on the control points A, B, C, and D and the control points **α** and **β** of the outline 5, the PostScript data 6 of the outline 5 is generated. The symbol denoted by "Xa, Ya" included in the PostScript data 6 indicates the coordinates of the control point A. The symbol denoted by "Xb, Yb" indicates the coordinates of the control point B. The symbol denoted by "Xc, Yc" indicates the coordinates of the control point C. The symbol denoted by "Xd, Yd" indicates the coordinates of the control point D. The symbol denoted by "X**α**, Y**α**" indicates the coordinates of the control point **α**. The symbol denoted by "X**β**, Y**β**" indicates the coordinates of the control point **β**. In the PostScript data 6, various kinds of commands "newpath moveto lineto curveto stroke showpage" are included.

The control unit 150 includes an acquiring unit 151, a determination unit 152, a specifying unit 153, and an output unit 154. The control unit 150 can be implemented by a central processing unit (CPU), a micro processing unit (MPU), or the like. Furthermore, the control unit 150 can also be implemented by hard-wired logic, such as an application specific integrated circuit (ASIC) or a field programmable gate array (FPGA).

The acquiring unit 151 is a processing unit that acquires captured image data from the camera 105. The acquiring unit 151 associates the acquired captured image data with the time and stores the associated information in the image buffer 141. The camera 105 may add time information to the captured image data at the time of capturing an image or the acquiring unit 151 may also acquire information on the time from a timer (not illustrated).

The determination unit 152 is a processing unit that determines, based on the captured image data stored in the image buffer 141 and based on the outline information 142, a top layer outline that is similar to the outline of the subject included in the captured image data. In the following, an example of a process performed by the determination unit 152 will be described.

The determination unit 152 extracts the contour shape of the subject of the captured image based on the captured image data (the first captured image data and the second captured image data) and based on the principle of the stereo camera. The determination unit 152 specifies the contour shape as the outline of the subject. In a description below the outline of the subject extracted from the captured image data is referred to as an "image outline".

Regarding each of the pieces of PostScript data held by the outline information 142, the determination unit 152 draws each of the top layer outlines based on the PostScript data in the top layer. The determination unit 152 compares each of the drawn top layer outlines with the image outline and calculates similarity. The determination unit 152 determines the top layer outline in which similarity to the image outline is greater than or equal to predetermined similarity. The determination unit 152 outputs, to the specifying unit 153, information on the top layer outline in which similarity to the image outline is greater than or equal to the predetermined similarity from among each of the top layer outlines. In a description below, the top layer outline in which similarity to the image outline greater than or equal to the predetermined similarity is referred to as a "candidate outline". The number of candidate outlines may also be plural.

The determination unit 152 may also calculate similarity between the top layer outline and the image outline in any manner. For example, the determination unit 152 may also calculate, as similarity, the match rate of the area bounded by the top layer outline and the area bounded by the image outline.

Furthermore, the determination unit 152 extracts the area bounded by the image outline from among the entire area of the captured image data, extracts edges from the image of the extracted area, and generates image edges. For example, the determination unit 152 generates the image edges by using the Hough transform, or the like.

The determination unit 152 performs the process described above and outputs information on the candidate outlines and information on the image edges to the specifying unit 153. The information on the candidate outlines that is output by the determination unit 152 to the specifying unit 153 is information that can specify a candidate outline and includes identification information and an angle (orientation information).

The specifying unit 153 is a processing unit that specifies, when the specifying unit 153 receives the information on the candidate outline, an object associated with the subject of the captured image data based on the shape of a part or the shape of a pattern located on the inner side of the candidate outline and based on the image edge of the captured image data. In a description below, an example of a process performed by the specifying unit 153 will be described.

The specifying unit 153 selects a single candidate outline, draws an edge of each of the parts from the PostScript data that is a subdirectory of the selected candidate outline, and compares each of the shapes of the edges included in the image edge with the edge of each of the parts. The specifying unit 153 counts the number of edges of the parts, in which similarity is greater than or equal to a threshold, that are present from among the compared edges of the parts. In a description below, the number of edges of the parts, in which similarity is greater than or equal to the threshold, that is present is referred to as the "number of matches".

The specifying unit 153 may also calculate similarity between the edge of the parts and the shape of the image edge in any manner. For example, the determination unit 152 may also calculate the match rate between the area bounded by the edge of the parts and the area formed by the image edge as similarity.

The specifying unit 153 similarly and repeatedly performs a process of counting the number of matches with respect to the other candidate outlines. The specifying unit 153 specifies identification information associated with the candidate outline in which the number of matches is the maximum from among each of the candidate outlines. The identification information specified by the specifying unit 153 is identification information on the object that is associated with the subject of the captured image data. The specifying unit 153 outputs the specified identification information to the output unit 154.

The output unit 154 is a processing unit that performs a process of outputting the identification information specified by the specifying unit 153. For example, the output unit 154 outputs the identification information to another external device via the communication unit 110. The output unit 154 may also output the information in which the captured image data that is the extraction source of the image outline is associated with the identification information.

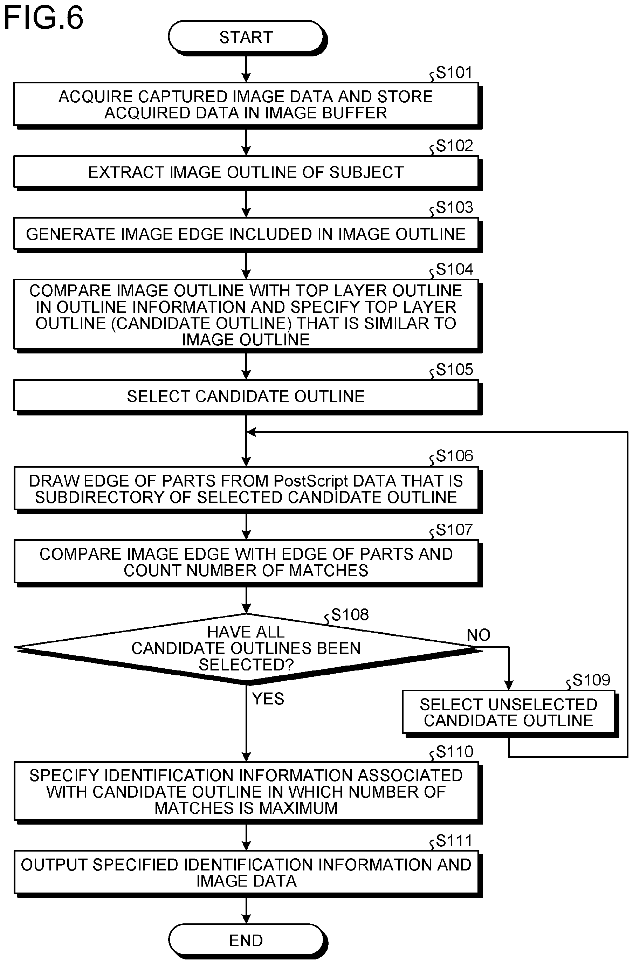

In the following, an example of the flow of a process performed by the information processing apparatus 100 according to the first embodiment will be described. FIG. 6 is a flowchart illustrating the flow of the process performed by the information processing apparatus according to the first embodiment. As illustrated in FIG. 6, the acquiring unit 151 in the information processing apparatus 100 acquires the captured image data and stores the acquired data in the image buffer 141 (Step S101).

The determination unit 152 in the information processing apparatus 100 extracts the image outline of the subject (Step S102). The determination unit 152 generates an image edge included in the image outline (Step S103). The determination unit 152 compares the image outline with the top layer outline in the outline information 142 and specifies a top layer outline (candidate outline) that is similar to the image outline (Step S104).

The specifying unit 153 in the information processing apparatus 100 selects a candidate outline (Step S105). The specifying unit 153 draws an edge of the parts from the PostScript data that is a subdirectory of the selected candidate outline (Step S106).

The specifying unit 153 compares the image edge with the edge of the part and counts the number of matches (Step S107). The specifying unit 153 determines whether the specifying unit 153 has selected all of the candidate outlines (Step S108). When the specifying unit 153 has not selected all of the candidate outlines (No at Step S108), the specifying unit 153 selects an unselected candidate outline (Step S109) and proceeds to Step S106.

In contrast, when the specifying unit 153 has selected all of the candidate outlines (Yes at Step S108), the specifying unit 153 specifies identification information associated with the candidate outline in which the number of matches is the maximum (Step S110). The output unit 154 in the information processing apparatus 100 outputs the specified identification information and the captured image data to an external device (or the display unit 130) (Step S111) .

In the following, the effect of the information processing apparatus 100 according to the first embodiment will be described. The information processing apparatus 100 specifies an image outline from the captured image data and narrows down the top layer outlines by comparing the image outline with the outline information 142. After having performed the narrowed down process, the information processing apparatus performs a process of comparing the image edge of the captured image data with the edge of the parts and specifying the object associated with the subject. Consequently, it is possible to reduce calculation load needed to specify the subject included in the captured image data.

According to the information processing apparatus 100, the information processing apparatus 100 extracts the contour shape (image outline) of the subject on the captured image based on the principle of the stereo camera and narrows down the top layer outlines. Consequently, it is possible to easily narrow down the top layer outlines as compared with a case of using the edge extracted from an image.

### Second Embodiment

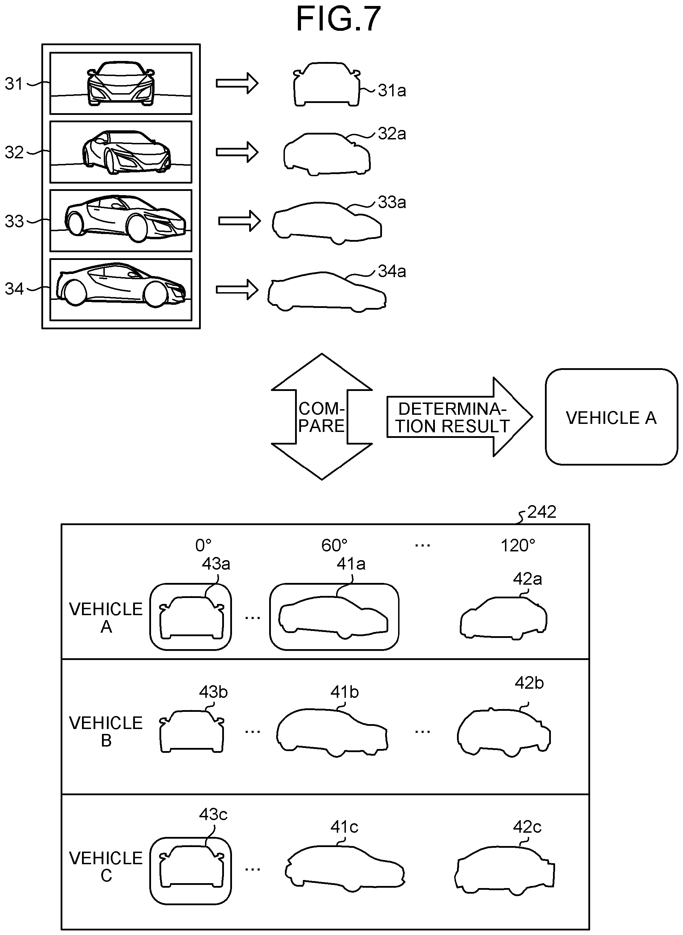

FIG. 7 is a diagram illustrating a process performed by an information processing apparatus according to a second embodiment. The information processing apparatus acquires pieces of captured image data 31, 32, 33, and 34 captured by a stereo camera. The information processing apparatus uses parallax of the stereo camera and specifies the shapes of the contours of the subjects from each of the pieces of the captured image data 31 to 34.

For example, it is assumed that the shape of the subject included in the captured image data 31 is an outline 31a. It is assumed that the shape of the contour of the subject included in the captured image data 32 is an outline 32a. It is assumed that the shape of the contour of the subject included in the captured image data 33 is an outline 33a. It is assumed that the shape of the contour of the subject included in the captured image data 34 is an outline 34a.

The outline information 242 associates pieces of orientation information on the objects with pieces of information on the outlines of the objects and stores therein the association information. In the outline information 242, the pieces of orientation information on the objects indicate the angle of the corresponding object and are listed in ascending order. An outline 43a is the shape of the contour of the vehicle A having the orientation "0°". An outline 41a is the shape of the contour of the vehicle A having the orientation "60°". An outline 42a is the shape of the contour of the vehicle A having the orientation "120°". Diagrams of the outlines of the other orientations related to the vehicle A will be omitted.

An outline 43b is the shape of the contour of the vehicle B having the orientation "0°". An outline 41b is the shape of the contour of the vehicle B having the orientation "60°". An outline 42b is the shape of the contour of the vehicle B having the orientation "120°". Diagrams of the outlines of the other orientations related to the vehicle B will be omitted.

An outline 43c is the shape of the contour of the vehicle C having the orientation "0°". An outline 41c is the shape of the contour of the vehicle C having the orientation "60°". An outline 42c is the shape of the contour of the vehicle having of the orientation "120°". Diagrams of the outlines of the other orientations related to the vehicle C will be omitted.

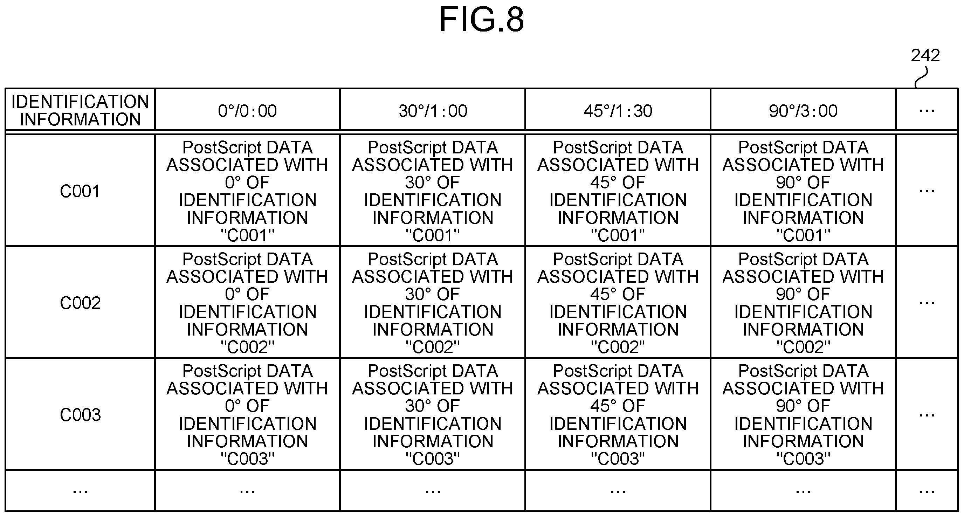

Further specific data structure of the outline information 242 is the one illustrated in FIG. 8. FIG. 8 is a diagram illustrating an example of the data structure of the outline information used in the second embodiment. As illustrated in FIG. 8, the outline information 242 includes identification information and PostScript data for each angle (the orientation of the object represented by time). The identification information is information that uniquely identifies an object. The information processing apparatus compares each of the outlines 31a to 34a with the outline information 242 and specifies which object is associated with the subject included in the pieces of the captured image data 31 to 34 from among the plurality of objects registered in the outline information 242.

The information processing apparatus compares each of the outlines 31a to 34a with the outline information 242 and repeatedly performs the process of specifying the similar outline to each of the outlines 31a to 34a.

For example, the information processing apparatus compares the outline 31a with each of the outlines 43a to 43c associated with orientation information "0°" and specifies the outlines 43a and 43c that are similar to the outline 31a. The information processing apparatus compares the outline 32a with each of the outlines associated with orientation information "30°" (not illustrated) and specifies a similar outline.

The information processing apparatus compares the outline 33a with each of the outlines 41a to 41c associated with the orientation information "60°" and specifies the outline 41a that is similar to the outline 33a. The information processing apparatus compares the outline 34a with each of the outlines associated with the orientation information "90°" (not illustrated) and specifies the similar outline.

The information processing apparatus accumulates the number of similar outlines for each vehicle of the outline information 242. The information processing apparatus determines that the vehicle in which the number of similar outlines is the maximum is the vehicle associated with the subject of the captured image data.

For example, it is assumed that, from among each of the outlines of the corresponding pieces of the orientation information associated with the vehicle A, a "single piece" of outline is specified as the outline that is similar to the outlines 31a to 34a of the pieces of the captured image data 31 to 34. It is assumed that, from among each of the outlines of the corresponding pieces of the orientation information associated with the vehicle B, "m pieces" of outlines are specified as the outlines that are similar to the outlines 31a to 34a of the pieces of the captured image data 31 to 34. It is assumed that, from among each of the outlines of the corresponding pieces of the orientation information associated with the vehicle C, "n pieces" of outlines are specified as the outlines that are similar to the outlines 31a to 34a of the pieces of the captured image data 31 to 34. Furthermore, it is assumed to be 1 piece>m pieces>n pieces. In this case, the information processing apparatus specifies the subject included in the captured image data 31 to 34 as the "vehicle A".

As illustrated in, the information processing apparatus according to the second embodiment extracts each of the outlines from the pieces of the corresponding captured image data and specifies the object associated with the subject from the association relationship between the outline for each angle stored in the outline information 242 and the extracted outline. By doing so, even when the shape of the contour of the subject is continuously changed, it is possible to inhibit a decrease in the accuracy of determining the object associated with the subject.

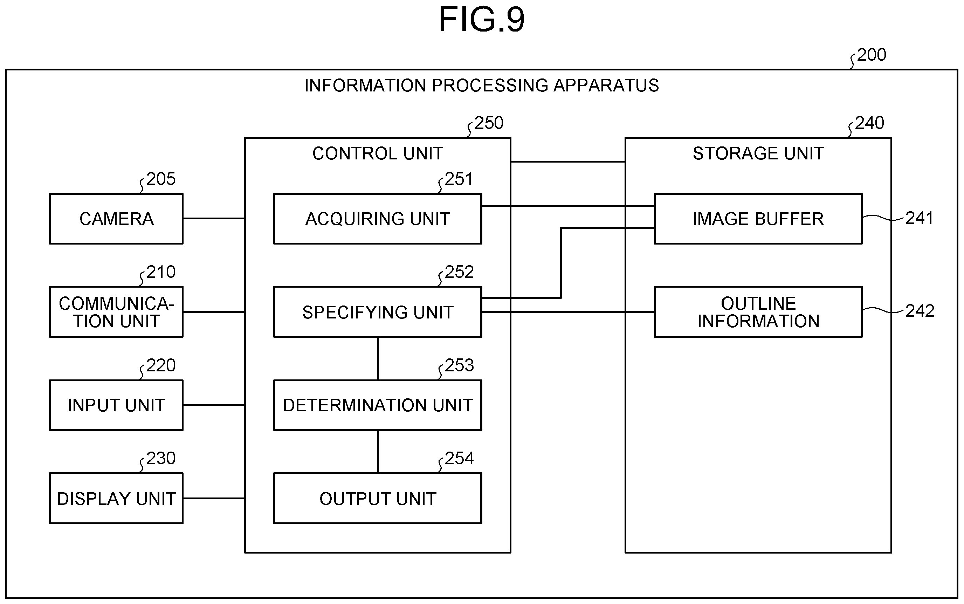

In the following, an example of a configuration of the information processing apparatus according to the second embodiment will be described. FIG. 9 is a functional block diagram illustrating the configuration of the information processing apparatus according to the second embodiment. As illustrated in FIG. 9, an information processing apparatus 200 includes a camera 205, a communication unit 210, an input unit 220, a display unit 230, a storage unit 240, and a control unit 250.

The camera 205 is a stereo camera (binocular camera) that simultaneously captures a subject from two different directions or is a monocular camera that can move from side to side. The camera 205 outputs captured image data to the information processing apparatus 200. The other descriptions related to the camera 205 are the same as those related to the camera 105.

The communication unit 210 is a processing unit that performs data communication with an external device via a network. The communication unit 210 is an example of the communication device. The information processing apparatus 200 may also be connected to the camera 205 via the network and receive the captured image data via the network.

The input unit 220 is an input device for inputting various kinds of information to the information processing apparatus 200. For example, the input unit 220 corresponds to a keyboard, a mouse, a touch panel, or the like.

The display unit 230 is a display device for displaying various kinds of information output from the control unit 250. For example, the display unit 230 corresponds to a liquid crystal display, a touch panel, and the like.

The storage unit 240 includes an image buffer 241 and the outline information 242. The storage unit 240 corresponds to a semiconductor memory device, such as a RAM, a ROM, and a flash memory, or a storage device, such as an HDD.

The image buffer 241 is a buffer that stores therein the captured image data captured by the camera 205. The data structure of the image buffer 241 is the same as the data structure of the image buffer 141 described with reference to FIG. 3; therefore, a description thereof will be omitted.

The outline information 242 is information that holds orientation information on objects, the outlines of the objects, and information on each of the parts included in the objects. The data structure of the outline information 242 is the same as that described with reference to FIG. 8.

The control unit 250 includes an acquiring unit 251, a specifying unit 252, a determination unit 253, and an output unit 254. The control unit 250 can be implemented by a CPU, an MPU, or the like. Furthermore, the control unit 250 can also be implemented by hard-wired logic, such as an ASIC or an FPGA.

The acquiring unit 251 is a processing unit that acquires captured image data from the camera 205. The acquiring unit 251 associates the acquired captured image data with the time and stores the associated information in the image buffer 241. The camera 205 may add time information to the captured image data at the time of capturing an image or the acquiring unit 251 may also acquire information on the time from a timer (not illustrated).

The specifying unit 252 is a processing unit that specifies a top layer outline that is similar to the image outline of the captured image data based on the captured image data stored in the image buffer 241 and based on the outline information 242. The top layer outline is, as described with reference to FIG. 8, the outline drawn by the PostScript data in the top layer.

The specifying unit 252 generates specific information including the time of the captured image data, identification information associated with the similar top layer outline, orientation information, and the like and outputs the generated information to the determination unit 253. When N pieces of the top layer outlines that are similar to the outline of the subject included in a single piece of the captured image data is present, the specifying unit 252 generates N pieces of specific information.

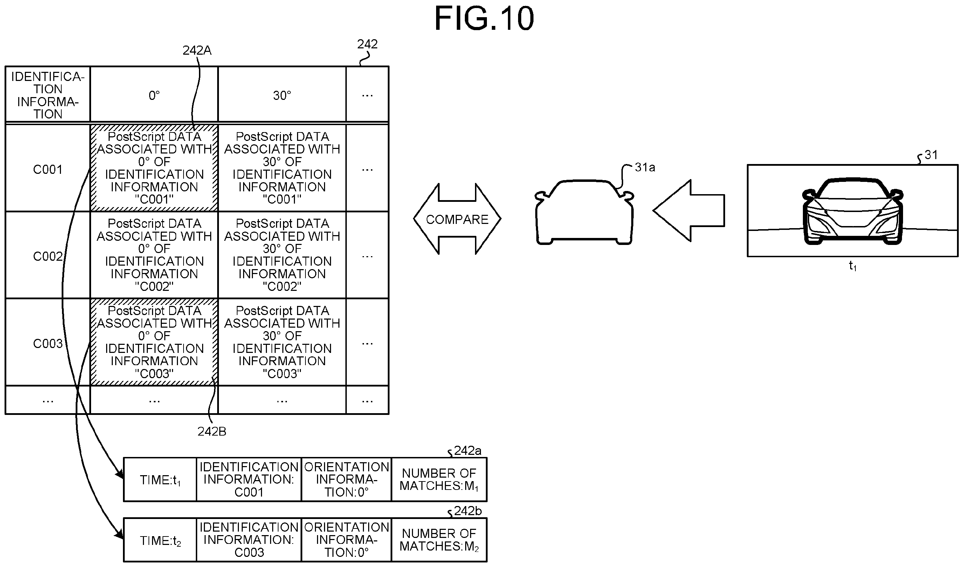

FIG. 10 is a diagram illustrating a process performed by a specifying unit according to the second embodiment. For example, as illustrated in FIG. 10, the specifying unit 252 extracts the image outline (outline) 31a from the captured image data 31 at time t₁. The process of extracting the image outline performed by the specifying unit 252 is the same as the process of extracting the image outline performed by the determination unit 152.

The specifying unit 252 draws each of the top layer outlines from the PostScript data stored in each of the areas of the outline information 242 and calculates similarity between the drawn top layer outline and the image outline 31a. The specifying unit 252 specifies the information that is related to the top layer outline and in which similarity to the image outline is greater than or equal to the predetermined similarity and generates specific information. Furthermore, the specifying unit 252 may also count the number of matches based on the image edge and the edge of the parts by performing the same process as that performed by the determination unit 152 according to the first embodiment.

For example, it is assumed that similarity between the top layer outlines stored in areas 242A and 242B of the outline information 242 and the image outline 31a is greater than or equal to the predetermined similarity. The specifying unit 252 generates specific information 242a associated with the area 242A. In the specific information 242a, the time "t₁", identification information "C001", orientation information "0°", and the number of matches "M₁" are associated. The specifying unit 252 generates specific information 242b associated with the area 242B. In the specific information 242b, the time "t₁", identification information "C003", the orientation information "0°", the number of matches "M₂" are associated.

The specifying unit 252 also repeatedly performs the same process on the other pieces of captured image data (for example, the captured image data 32 to 34, or the like illustrated in FIG. 8) followed by the captured image data 31 and generates specific information. The specifying unit 252 outputs each of the pieces of generated specific information to the determination unit 253.

The determination unit 253 is a processing unit that determines identification information on the object associated with the subject of each of the pieces of the captured image data based on each of the pieces of the specific information acquired from the specifying unit 252. The determination unit 253 outputs the determined identification information to the output unit 254.

For example, the determination unit 253 classifies a plurality of pieces of specific information into each of the pieces of identification information. The determination unit 253 counts the number of pieces of specific information classified into each of the pieces of the identification information and determines the identification information associated with a group in which the number of pieces of the specific information is the maximum. It is assumed that the number of pieces of the specific information having the identification information "C001" is one piece, the number of pieces of the specific information having the identification information "C002" is "m pieces", and the number of pieces of the specific information having the identification information "C003" is "n pieces" and it is assumed to be 1 piece>m pieces>n pieces. In this case, the identification information on the object associated with the subject included in the captured image data is "C001".

Here, when a plurality of pieces of identification information each having the same number of pieces of the specific information are present, the determination unit 253 may also determine one piece of identification information by performing the following process. As an example, a process performed by the determination unit 253 will be described with the assumption that the pieces of identification information having the same number of pieces of the specific information are the identification information "C001" and "C003".

The determination unit 253 arranges pieces of specific information including the identification information "C001" in time series. The determination unit 253 scans the pieces of the specific information arranged in time series and determines the tendency of an overall change in the orientation information is in ascending order or in descending order. When the tendency of the change is in ascending order, by repeatedly performing a process of comparing the pieces of orientation information on the pieces of before and after the specific information, adding one to an evaluation value when the pieces of the orientation information is increased, and adding zero to the evaluation value when the number of pieces of the orientation information are not increased, the determination unit 253 calculates an evaluation value of the identification information "C001".

In contrast, the determination unit 253 calculates an evaluation value of the identification information "C001" by repeatedly performing a process of scanning the pieces of the specific information arranged in time series; comparing the pieces of the orientation information on before and after the pieces of the specific information when the tendency of an overall change in the orientation information is a descending order, adding one to the evaluation value when the pieces of the orientation information is decreased; and adding zero to the evaluation value when the number of pieces of the orientation information is not decreased.

Also regarding the identification information "C003", the determination unit 253 also calculate the evaluation value of the identification information "C003". The determination unit 253 compares the evaluation value of the identification information "C001" with the evaluation value of "C003" and determines the identification information on the greater evaluation value side as the identification information on the object associated with the subject included in the captured image data.

Furthermore, the determination unit 253 may also perform a process of determining the identification information by using the number of matches included in the specific information. For example, when the determination unit 253 performs the process described above, the determination unit 253 performs a process of excluding the specific information in which the number of matches is less than the threshold from the target from among each of the pieces of the specific information. After having excluded the subject specific information, the determination unit 253 performs a process of classifying the remaining pieces of the specific information based on the number of matches and calculating an evaluation value.

The output unit 254 is a processing unit that performs a process of outputting the identification information specified by the determination unit 253. For example, the determination unit 253 outputs the identification information to another external device via the communication unit 110. The output unit 254 may also output the information in which the captured image data that is the extraction source of the image outline is associated with the identification information

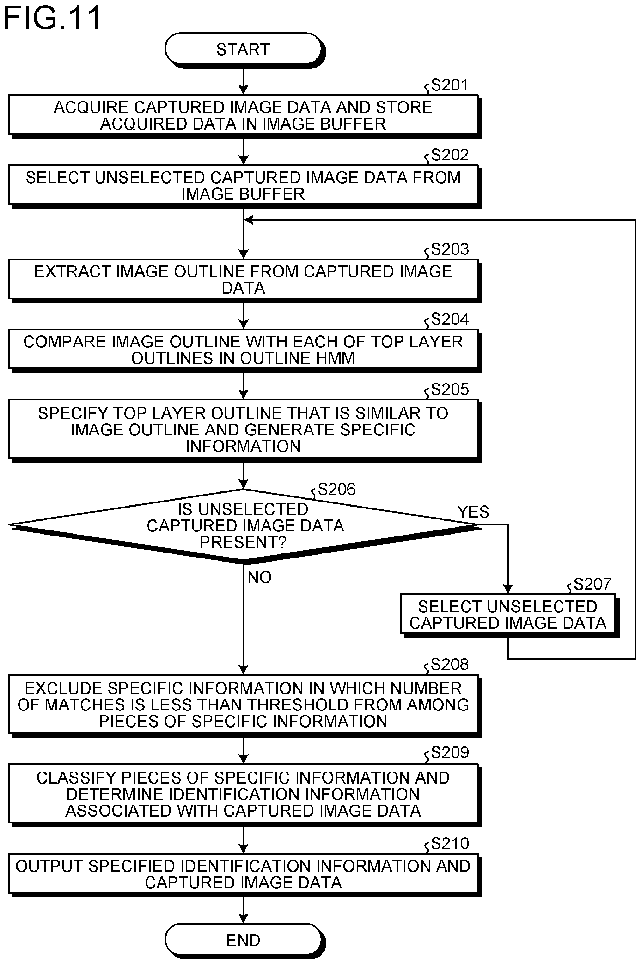

In the following, an example of the flow of a process performed by the information processing apparatus 200 according to the second embodiment will be described. FIG. 11 is a flowchart illustrating the flow of the process performed by the information processing apparatus according to the second embodiment. As illustrated in FIG. 11, the acquiring unit 251 in the information processing apparatus 200 acquires the captured image data from the camera 205 and stores the acquired data in the image buffer 241 (Step S201) .

The specifying unit 252 in the information processing apparatus 200 selects unselected captured image data from the image buffer 241 (Step S202). The specifying unit 252 extracts an image outline from the captured image data (Step S203). The specifying unit 252 compares the image outline with each of the top layer outlines in the outline information 242 (Step S204).

The specifying unit 252 specifies the top layer outline that is similar to the image outline and generates specific information (Step S205). The specifying unit 252 determines whether unselected captured image data is present in the image buffer 241 (Step S206).

When unselected captured image data is present (Yes at Step S206), the specifying unit 252 selects the unselected captured image data (Step S207) and proceeds to Step S203. In contrast, when unselected captured image data is not present (No at Step S206), the specifying unit 252 proceeds to Step S208.

The determination unit 253 in the information processing apparatus 200 excludes the specific information in which the number of matches is less than the threshold from among the pieces of the specific information (Step S208). The determination unit 253 classifies the pieces of the specific information and determines the identification information associated with the captured image data (Step S209). The output unit 254 in the information processing apparatus 200 outputs the specified identification information and the captured image data to an external device (or, the display unit 230) (Step S210).

In the following, the effect of the information processing apparatus 200 according to the second embodiment will be described. The information processing apparatus 200 extracts each of the outlines from of the pieces of the corresponding captured image data and specifies the object associated with the subject based on the association relationship between the outline for each angle stored in the outline information 242 and the extracted outline. By doing so, even when the shape of the contour of the subject is continuously changed, it is possible to inhibit a decrease in the accuracy of determining the object associated with the subject.

Incidentally, the process performed by the information processing apparatus 200 described above is not limited to the process described above. For example, when the specifying unit 252 extracts an image outline from the captured image data and specifies a plurality of top layer outlines in which similarity is greater than or equal to the threshold, the specifying unit 252 may also narrow down, based on the order relation, the top layer outlines that are to be compared with the image outline of the following captured image data.

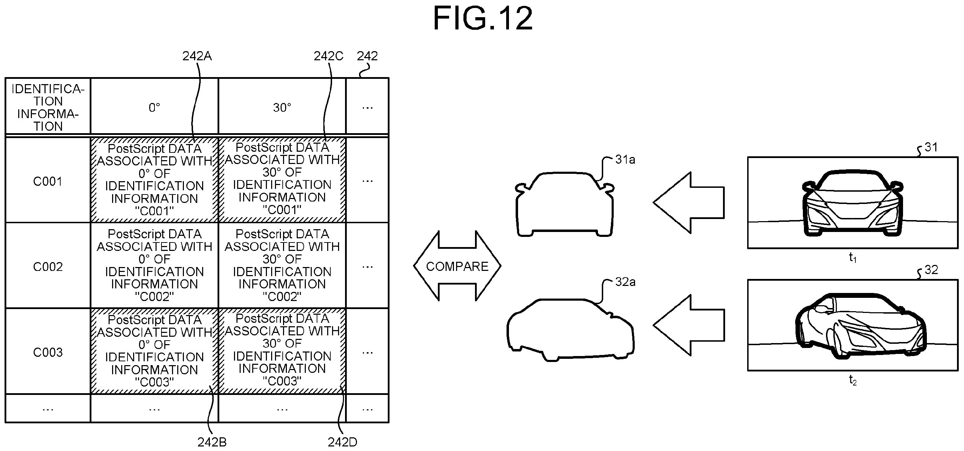

FIG. 12 is a diagram illustrating another process performed by the information processing apparatus. For example, the specifying unit 252 extracts the image outline (outline) 31a from the captured image data 31 at the time t₁. The process of extracting the image outline performed by the specifying unit 252 is the same as the process of extracting the image outline performed by the determination unit 152.

The specifying unit 252 draws each of the top layer outlines from the PostScript data stored in the corresponding areas in the outline information 242 and calculates similarity between the drawn top layer outline and the image outline 31a. The specifying unit 252 specifies the information that is related to the top layer outline and in which similarity to the image outline is greater than the predetermined similarity. For example, it is assumed that the similarity between the top layer outline stored in the areas 242A and 242B in the outline information 242 and the image outline 31a is greater than or equal to the predetermined similarity.

Here, the specifying unit 252 specifies the top layer outlines of areas 242C and 242D associated with the areas 242A and 242B in the outline information 242 of the orientation information "30°" having a predetermined order relationship with the orientation information "0°".

Then, the determination unit 253 extracts the image outline (outline) 32a from the captured image data 32 at the time t₂. The determination unit 253 calculates similarity R1 between the top layer outline of the area 242C specified by the specifying unit 252 and the image outline 32a. The determination unit 253 calculates similarity R2 between the top layer outline of the area 242D and the image outline 32a. When the similarity R1 is greater than the similarity R2, the determination unit 253 determines that the identification information "C001" with respect to the subject included in the pieces of the captured image data 31 and 32 is indicated. In contrast, when the similarity R1 is not greater than the similarity R2, the determination unit 253 determines that the identification information "C003" with respect to the subject included in the pieces of the captured image data 31 and 32 is indicated.

As described above, the information processing apparatus can reduce an amount of calculation by narrowing down the top layer outline vectors that are to be compared with the image outlines of the captured image data based on the order relationship. Furthermore, even when the shape of the contour of the subject is continuously changed, it is possible to inhibit a decrease in the accuracy of determining the object associated with the subject.

Furthermore, in the example illustrated in FIG. 12, from among the pieces of the orientation information "30°" having the predetermined order relationship (counterclockwise) with orientation information "0°/0:00", the top layer outlines of the areas 242C and 242D associated with the areas 242A and 242B, respectively, in the outline information 242 are specified. However, the orientation information having the predetermined order relationship with orientation information "0°" may also be, for example, orientation information "-30° (330°)" (not illustrated) or may also be both pieces of the orientation information (30° and 330°) .

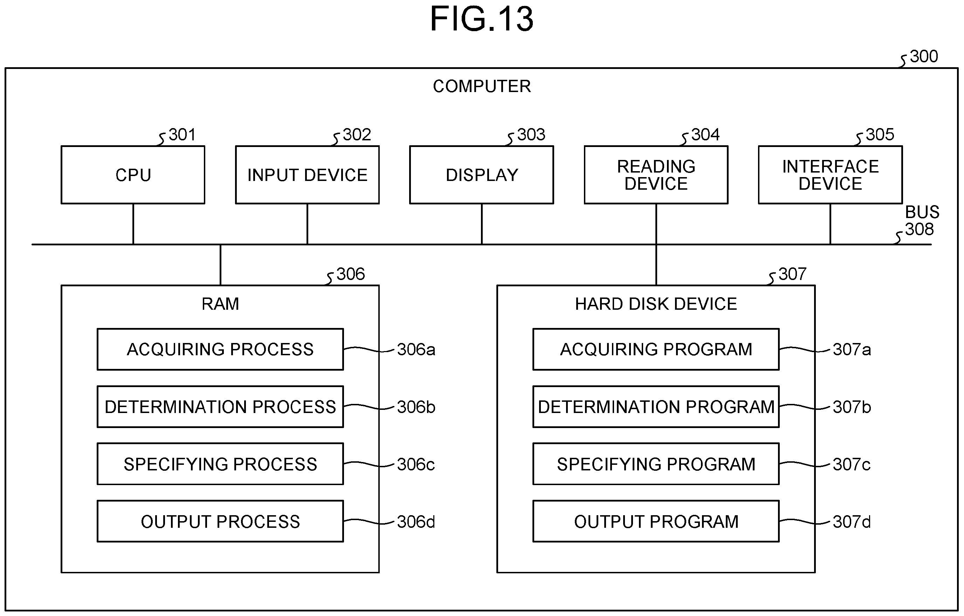

An example of a hardware configuration of a computer that implements the same function as that performed by the information processing apparatus 100 described above in the first embodiment. FIG. 13 is a diagram illustrating an example of the hardware configuration of the computer that implements the same function as that performed by the information processing apparatus according to the first embodiment.

As illustrated in FIG. 13, a computer 300 includes a CPU 301 that executes various kinds of arithmetic processing, an input device 302 that receives data from a user, and a display 303. Furthermore, the computer 300 includes a reading device 304 that reads programs or the like from a storage medium, and an interface device 305 that sends and receives data to and from an external device, the camera 105, or the like via a wired or wireless network. The computer 300 includes a RAM 306 that temporarily stores therein various kinds of information and a hard disk device 307. Then, each of the devices 301 to 307 is connected to a bus 308.

The hard disk device 307 includes an acquiring program 307a, a determination program 307b, a specifying program 307c, and an output program 307d. The CPU 301 reads the acquiring program 307a, the determination program 307b, the specifying program 307c, and the output program 307d and loads the read programs in the RAM 306.

The acquiring program 307a functions as an acquiring process 306a. The determination program 307b functions as a determination process 306b. The specifying program 307c functions as a specifying process 306c. The output program 307d functions as an output process 306d.

The process of the acquiring process 306a corresponds to the process of the acquiring unit 151. The process of the determination process 306b corresponds to the process of the determination unit 152. The process of the specifying process 306c corresponds to the process of the specifying unit 153. The process of the output process 306d corresponds to the process of the output unit 154.

Furthermore, each of the programs 307a to 307e does not need to be stored in the hard disk device 307 from the beginning. For example, each of the programs is stored in a "portable physical medium", such as a flexible disk (FD), a CD-ROM, a DVD disk, a magneto-optic disk, an IC CARD, that is to be inserted into the computer 300. Then, the computer 300 may also read each of the programs 307a to 307e and execute the programs.

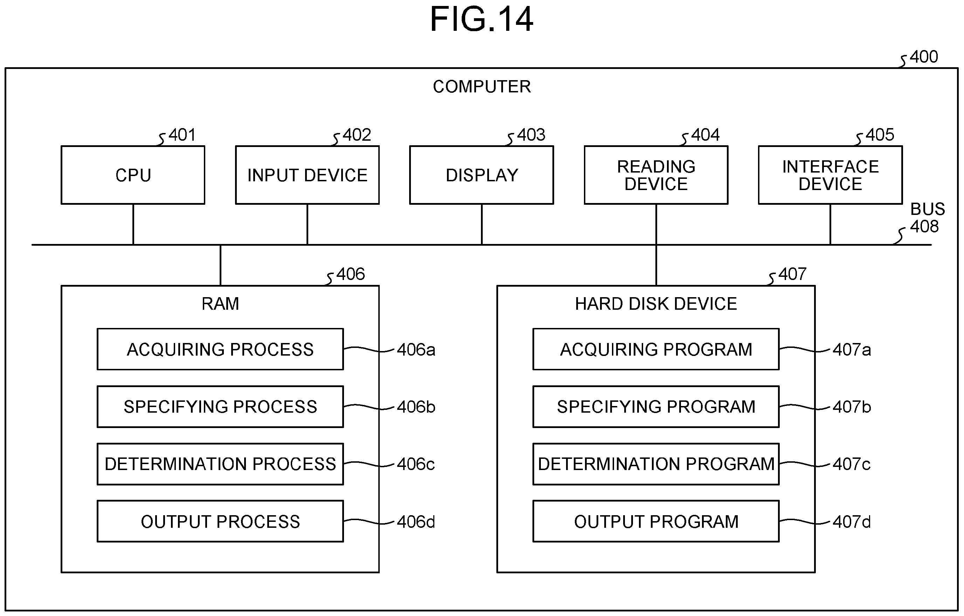

An example of a hardware configuration of a computer that implements the same function as that performed by the information processing apparatus 200 described above in the second embodiment. FIG. 14 is a diagram illustrating an example of the hardware configuration of the computer that implements the same function as that performed by the information processing apparatus according to the second embodiment.

As illustrated in FIG. 14, a computer 400 includes a CPU 401 that executes various kinds of arithmetic processing, an input device 402 that receives an input of data from a user, and a display 403. Furthermore, the computer 400 includes a reading device 404 that reads programs or the like from a storage medium, and an interface device 405 that sends and receives data to and from an external device, the camera 205, or the like via a wired or wireless network. The computer 400 includes a RAM 406 that temporarily stores therein various kinds of information and a hard disk device 407. Then, each of the devices 401 to 407 is connected to a bus 408.

The hard disk device 407 includes an acquiring program 407a, a specifying program 407b, a determination program 407c, and an output program 407d. The CPU 401 reads the acquiring program 407a, the specifying program 407b, the determination program 407c, and the output program 407d and loads the read programs in the RAM 406.

The acquiring program 407a functions as an acquiring process 406a. The specifying program 407b functions as a determination process 406b The determination program 407c functions as a determination process 406c. The output program 407d functions as an output process 406d.

The process of the acquiring process 406a corresponds to the process of the acquiring unit 251. The process of the specifying process 406b corresponds to the process of the specifying unit 252. The process of the determination process 406c corresponds to the process of the determination unit 253. The process of the output process 406d corresponds to the process of the output unit 254.

Furthermore, each of the programs 407a to 407e does not need to be stored in the hard disk device 307 from the beginning. For example, each of the programs is stored in a "portable physical medium", such as a flexible disk (FD), a CD-ROM, a DVD disk, a magneto-optic disk, an IC CARD, that is to be inserted into the computer 400. Then, the computer 400 may also read each of the programs 407a to 407e and execute the programs.

### Reference Signs List

- 100, 200: information processing apparatus
- 105, 205: camera
- 110, 210: communication unit
- 120, 220: input unit
- 130, 230: display unit
- 140, 240: storage unit
- 141, 241: image buffer
- 142, 242: outline information
- 150, 250: control unit
- 151, 251: acquiring unit
- 152, 253: determination unit
- 153, 252: specifying unit
- 154, 254: output unit

## Claims

1. A specifying method that causes a computer to execute a process comprising:
acquiring a captured image captured by an image capturing device;
determining, based on a storage unit that stores therein a plurality of pieces of contour data indicating shapes of contours of a plurality of objects, whether a plurality of pieces of contour data associated with a contour of a subject included in the acquired captured image is included in the plurality of pieces of contour data indicating the shapes of the contours of the plurality of objects;
acquiring, when a determination result is affirmative, based on a storage unit in which region data indicating shapes or patterns of regions positioned at an inner side of the contours of the objects is stored in association with the contour data indicating the shapes of the contours of the objects, a plurality of pieces of region data associated with the plurality of pieces of corresponding contour data associated with the contour of the subject; and
specifying, based on the plurality of pieces of acquired region data, an object associated with the subject from among the plurality of objects.

2. The specifying method according to claim 1, wherein
the acquiring includes acquiring, when acquiring the plurality of pieces of region data, based on a storage unit in which positions with respect to the objects of the regions or the patterns positioned at the inner side of the contours of the objects are stored in association with the contour data indicating the contours of the objects, from among the plurality of pieces of region data associated with the plurality of pieces of corresponding contour data associated with the contour of the subject, region data associated with a plurality of positions associated with the plurality of pieces of corresponding contour data associated with the contour of the subject.

3. The specifying method according to claim 1 or 2, wherein
the image capturing device is an image capturing device that simultaneously captures the subject from different directions, and the specifying method further comprises
extracting the contour of the subject based on a first direction captured image and a second direction captured image that are simultaneously captured by the image capturing device.

4. The specifying method according to claim 3, further comprising
extracting a plurality of edges from an area on the inner side of the contour of the extracted subject of the captured image, wherein
the specifying includes specifying, based on the plurality of extracted edges and the plurality of pieces of region data, the object associated with the subject from among the plurality of objects.

5. A determination method that causes a computer to execute a process comprising:
specifying, when acquiring a first captured image captured by an image capturing device, based on a storage unit that stores therein a plurality of contour data groups indicating a plurality of shapes of contours held by a plurality of corresponding objects, from among the plurality of contour data groups, a plurality of contour data groups that includes therein contour data associated with a contour of a subject included in the acquired first captured image;
specifying, based on a storage unit in which a plurality of pieces of contour data included in the plurality of specified corresponding contour data groups is stored in association with the order of the plurality of pieces of contour data, from among the plurality of pieces of contour data included in the plurality of specified corresponding contour data groups, a plurality of pieces of contour data having a specific order relationship with respect to the contour data that is associated with the contour of the subject; and
determining, when acquiring a second captured image that is newly captured by the image capturing device, which object is associated with the subject based on an association relationship between the plurality of pieces of contour data and the contour of the subject included in the second captured image.

6. The determination method according to claim 5, wherein
the image capturing device is an image capturing device that simultaneously captures a subject from different directions, and the determination method further comprises
extracting the contour of the subject based on a first direction captured image and a second direction captured image that are simultaneously captured by the image capturing device.

7. A specifying program that causes a computer to execute a process comprising:
acquiring a captured image captured by an image capturing device;
determining, based on a storage unit that stores therein a plurality of pieces of contour data indicating shapes of contours of a plurality of objects, whether a plurality of pieces of contour data associated with a contour of a subject included in the acquired captured image is included in the plurality of pieces of contour data indicating the shapes of the contours of the plurality of objects;
acquiring, when a determination result is affirmative, based on a storage unit in which region data indicating shapes or patterns of regions positioned at an inner side of the contours of the objects is stored in association with the contour data indicating the shapes of the contours of the objects, a plurality of pieces of region data associated with the plurality of pieces of corresponding contour data associated with the contour of the subject; and
specifying, based on the plurality of pieces of acquired region data, an object associated with the subject from among the plurality of objects.

8. The specifying program according to claim 7, wherein
the acquiring includes acquiring, when acquiring the plurality of pieces of region data, based on a storage unit in which positions with respect to the objects of the regions or the patterns positioned at the inner side of the contours of the objects are stored in association with the contour data indicating the contours of the objects, from among the plurality of pieces of region data associated with the plurality of pieces of corresponding contour data associated with the contour of the subject, region data associated with a plurality of positions associated with the plurality of pieces of corresponding contour data associated with the contour of the subject.

9. The specifying program according to claim 7 or 8, wherein
the image capturing device is an image capturing device that simultaneously captures the subject from different directions, and the specifying method further comprises
extracting the contour of the subject based on a first direction captured image and a second direction captured image that are simultaneously captured by the image capturing device.

10. The specifying program according to claim 9, further comprising
extracting a plurality of edges from an area on the inner side of the contour of the extracted subject of the captured image, wherein
the specifying includes specifying, based on the plurality of extracted edges and the plurality of pieces of region data, the object associated with the subject from among the plurality of objects.

11. A determination program that causes a computer to execute a process comprising:
specifying, when acquiring a first captured image captured by an image capturing device, based on a storage unit that stores therein a plurality of contour data groups indicating a plurality of shapes of contours held by a plurality of corresponding objects, from among the plurality of contour data groups, a plurality of contour data groups that includes therein contour data associated with a contour of a subject included in the acquired first captured image;
newly specifying, based on a storage unit in which a plurality of pieces of contour data included in the plurality of specified corresponding contour data groups is stored in association with the order of the plurality of pieces of contour data, from among the plurality of pieces of contour data included in the plurality of specified corresponding contour data groups, a plurality of pieces of contour data having a specific order relationship with respect to the contour data that is associated with the contour of the subject; and
determining, when acquiring a second captured image that is newly captured by the image capturing device, which object is associated with the subject based on an association relationship between the plurality of pieces of newly specified contour data and the contour of the subject included in the second captured image.

12. The determination program according to claim 11, wherein
the image capturing device is an image capturing device that simultaneously captures a subject from different directions, and the determination method further comprises
extracting the contour of the subject based on a first direction captured image and a second direction captured image that are simultaneously captured by the image capturing device.

13. An information processing apparatus comprising:
an acquiring unit that acquires a captured image acquired by an image capturing device;
a determination unit that determines, based on a storage unit that stores therein a plurality of pieces of contour data indicating shapes of contours of a plurality of objects, whether a plurality of pieces of contour data associated with a contour of a subject included in the acquired captured image is included in the plurality of pieces of contour data indicating the shapes of the contours of the plurality of objects; and
a specifying unit that acquires, when a determination result obtained by the determination unit is affirmative, based on a storage unit in which region data indicating shapes or patterns of regions positioned at an inner side of the contours of the objects is stored in association with the contour data indicating the shapes of the contours of the objects, a plurality of pieces of region data associated with the plurality of pieces of corresponding contour data associated with the contour of the subject and that specifies, based on the plurality of pieces of acquired region data, an object associated with the subject from among the plurality of objects.

14. The information processing apparatus according to claim 13, wherein
the specifying unit acquires, when acquiring the plurality of pieces of region data, based on a storage unit in which positions with respect to the objects of the regions or the patterns positioned at the inner side of the contours of the objects are stored in association with the contour data indicating the contours of the objects, from among the plurality of pieces of region data associated with the plurality of pieces of corresponding contour data associated with the contour of the subject, region data associated with the plurality of positions associated with a plurality of pieces of corresponding contour data associated with the contour of the subject.

15. The information processing apparatus according to claim 13 or 14, wherein
the image capturing device is an image capturing device that simultaneously captures the subject from different directions, and
the determination unit extracts the contour of the subject based on a first direction captured image and a second direction captured image that are simultaneously captured by the image capturing device.

16. The information processing apparatus according to claim 15, wherein the specifying unit extracts a plurality of edges from an area on the inner side of the contour of the extracted subject of the captured image and specifies, based on the plurality of extracted edges and the plurality of pieces of region data, the object associated with the subject from among the plurality of objects.

17. An information processing apparatus comprising:
a specifying unit that
specifies, when acquiring a first captured image captured by an image capturing device, based on a storage unit that stores therein a plurality of contour data groups indicating a plurality of shapes of contours held by a plurality of corresponding objects, from among the plurality of contour data groups, a plurality of contour data groups that includes therein contour data associated with a contour of a subject included in the acquired first captured image, and that
newly specifies, based on a storage unit in which a plurality of pieces of contour data included in the plurality of specified corresponding contour data groups is stored in association with the order of the plurality of pieces of contour data, from among the plurality of pieces of contour data included in the plurality of specified corresponding contour data groups, a plurality of pieces of contour data having a specific order relationship with respect to the contour data that is associated with the contour of the subject; and
a determination unit that determines, when acquiring a second captured image that is newly captured by the image capturing device, which object is associated with the subject based on an association relationship between the plurality of pieces of newly specified contour data and the contour of the subject included in the second captured image.

18. The information processing apparatus according to claim 17, wherein
the image capturing device is an image capturing device that simultaneously captures a subject from different directions, and
the specifying unit extracts the contour of the subject based on a first direction captured image and a second direction captured image that are simultaneously captured by the image capturing device.
